# EUROPÄISCHE PATENTANMELDUNG

(11) **EP 1 416 175 A2**
(43) Veröffentlichungstag der Anmeldung: **06.05.2004**
(21) Anmeldenummer: 03022767.2
(22) Anmeldetag: 10.10.2003
(51) Int. Cl.: F16C 11/06, B62D 7/16, F16J 3/04

(54) **Abdichtung für ein Kugelgelenk**

(30) Priorität: 14.10.2002 DE 20216045 U
(71) Anmelder: Sachsenring Fahrzeugtechnik GmbH, 08058 Zwickau (DE)
(72) Erfinder: Dietrich, Swen, 08304 Schönheide (DE); Voy, Christian, Prof. Dr., 29549 Bad Bevensen (DE); Wackes, Ulrich, 08115 Lichtentanne (DE); Lange, Dirk, 08060 Zwickau (DE); Lange, Jürgen, Dr., 08435 Ruppertsgrün (DE)
(74) Vertreter: Rumrich, Gabriele, Dipl.-Ing.

(57) **Zusammenfassung**

Die Erfindung betrifft eine Abdichtung für ein Kugelgelenk, welches ein Gehäuse (1) zur Aufnahme einer beweglich gelagerten Kugel (2) eines Kugelzapfens (K) sowie einen zwischen dem Gehäuse (1) und dem Kugelzapfen (K) angeordneten Dichtungsbalg (3) aufweist, dessen erster Dichtungsbalgrand (D1) an dem Schaft (4) und dessen zweiter Dichtungsbalgrand (D2) an dem Gehäuse (1) des Kugelzapfens (K) abdichtend anliegt. Erfindungsgemäß weist das Gehäuse (1) auf der zum Schaft (4) hin offenen Seite einen radial umlaufenden, nach innen gerichteten Flansch (1.1) und der sich am Gehäuse (1) abstützende Dichtungsbalgrand (D2) einen radial umlaufenden, nach außen gerichteten Schenkel (5) auf, wobei zwischen dem den Schenkel (5) übergreifenden Flansch (1.1) und dem Schenkel (5) ein Dicht/Sicherungselement (6) angeordnet ist.

## Beschreibung

Die Erfindung betrifft eine Abdichtung für ein Kugelgelenk, welches ein Gehäuse zur Aufnahme einer beweglich gelagerten Kugel eines Kugelzapfens sowie einen zwischen dem Gehäuse und dem Kugelzapfen angeordneten Dichtungsbalg aufweist, dessen erster Dichtungsbalgrand an dem Schaft des Kugelzapfens und dessen zweiter Dichtungsbalgrand an dem Gehäuse abdichtend anliegt.
Bei derartigen Kugelgelenken, die beispielsweise in der Fahrzeugtechnik Anwendung finden, erfolgt die Befestigung des Dichtungsbalgrandes üblicher Weise an deren Außenkontur mittels Spannringen ( DE 36 41 030 C1, DE 44 13 664 C2, DE 197 50 830 A1). Dies ist zum einen relativ aufwändig und zum anderen ist die Gefahr des Ausreißens des Dichtungsbalges sehr groß.
In der DE 44 12 597 C2 wird eine Lösung beschrieben, bei der das gehäuseseitige Dichtungsbalgende von einer außen radial umlaufenden Mulde der im Gehäuse angeordneten Lagerschale aufgenommen wird, wobei sich der Wulstrand des Dichtungsbalges radial nach außen gegen einen Bördelrand des Gehäuses abstützt. Dadurch wird die Gefahr des Ausreißens verringert. Eine Befestigung mittels Spannring ist aber trotzdem unumgänglich.
Die DE 101 60 989 A1 zeigt eine Möglichkeit der gehäuseseitigen Befestigung des Dichtungsbalges ohne Spannring. Dabei ist in das Dichtungsbalgende ein Element, wie beispielsweise ein radial nach außen abgewinkelter Metallring, einvulkanisiert. Dieser radial nach außen gerichtete Bereich des Metallrings wird gegen den radial nach innen umgeformten Rollrand des Gehäuses gepresst.
Dadurch wird insbesondere durch den nach innen gerichteten, den Metallring umfassenden Rollrand des Gehäuses, wie es in dieser Druckschrift in Fig. 9 dargestellt ist, die Ausreißgefahr vermindert. Allerdings bedeutet die Einvulkanisierung des Metallringes in den Dichtungsbalg einen zusätzlichen Arbeitsschritt und damit eine aufwändige Herstellung.

Aufgabe der Erfindung ist es, eine Abdichtung für ein Kugelgelenk zu schaffen, die bei einfacher Befestigung am Schaft des Kugelzapfens ein hohes Maß an Dichtheit und Ausreißsicherheit gewährleistet.

Erfindungsgemäß weist das Gehäuse auf der zum Schaft hin offenen Seite einen radial umlaufenden, nach innen gerichteten Flansch und der sich am Gehäuse abstützende Dichtungsbalgrand einen radial umlaufenden, nach außen gerichteten Schenkel auf, wobei zwischen dem den Schenkel übergreifenden Flansch und dem Schenkel des Dichtungsbalgrandes ein radial umlaufendes Dicht-/Sicherungselement angeordnet ist. Das ringförmig ausgebildete Dicht-/Sicherungselement ist dabei mit dem Gehäuse und mit dem Dichtungsbalgrand formschlüssig verbunden. Der Schenkel des Dichtungsbalgrandes und das Dicht-/Sicherungselement sind zumindest teilweise innerhalb einer umlaufenden, nach innen geöffneten Mulde des Gehäuses angeordnet, die durch Flansch, Grundkörper und einen, beide verbindenden, Axialschenkel gebildet wird.
Mit einer unteren waagerechten Anlagefläche liegt das Dicht-/Sicherungselement an dem radial nach außen gerichteten Schenkel des Dichtungsbalgrandes und mit einer oberen waagerechten Anlagefläche am Flansch des Gehäuses an, während es sich mit einer äußeren senkrechten Anlagefläche an dem Axialschenkel abstützt.
In einer Ausführungsform weist das Dicht-/Sicherungselement auf seiner dem Schenkel des Dichtungsbalgrandes zugewandten Anlagefläche eine radial umlaufende Einbuchtung auf, die mit einer komplementären radial umlaufenden Erhebung des Schenkels in Eingriff steht. Ebenso kann das Dicht-/Sicherungselement auf seiner dem Schenkel des Dichtungsbalgrandes zugewandten Anlagefläche eine radial umlaufende Erhebung aufweisen, die mit einer komplementären radial umlaufenden Einbuchtung des Schenkels in Eingriff steht. Das Dicht-/Sicherungselement kann außerdem auf seiner dem Schenkel des Dichtungsbalgrandes zugewandten Anlagefläche voneinander beabstandete Vorsprünge aufweisen, die in komplementäre, in axialer Richtung verlaufende, durchgehende Öffnungen des Schenkels des Dichtungsbalgrandes eingreifen. Die durch diese Öffnungen hindurchreichenden Vorsprünge des Dicht-/Sicherungselementes liegen mit einer weiteren Anlagefläche am Grundkörper des Gehäuses an. Dabei kann die Anordnung der Vorsprünge auf dem Dicht-/Sicherungselement sowohl auf einem gemeinsamen als auch auf unterschiedlichen Teilkreisen erfolgen. Der radial nach innen gerichtete Flansch des Gehäuses ist vorzugsweise ein durch Einrollen umgeformter Rollrand. Das Dicht-/ Sicherungselement kann z.B. aus Metall, Kunststoff oder Keramik bestehen.

Die Erfindung wird nachstehend an mehreren Ausführungsbeispielen näher erläutert.
Es zeigen:
Fig. 1: Kugelgelenk mit einer möglichen Ausführungsform der erfindungsgemäßen Abdichtung
Fig. 2, Fig. 3 und Fig. 4: Ausschnitte der gehäuseseitigen Befestigung des Dichtungsbalges mit verschiedenen Ausführungsformen der erfindungsgemäßen Abdichtung
Fig. 5: Einzelheit nach Fig. 4

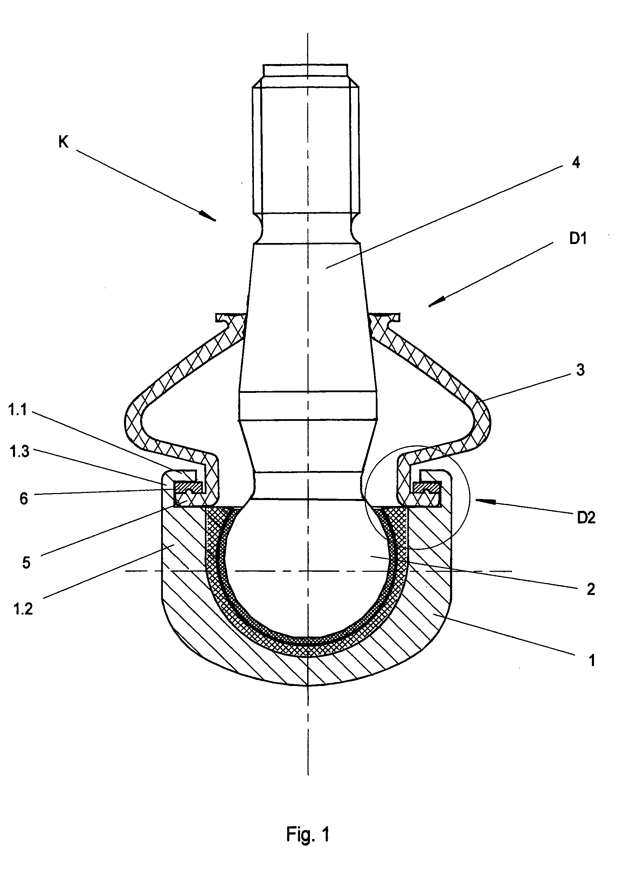

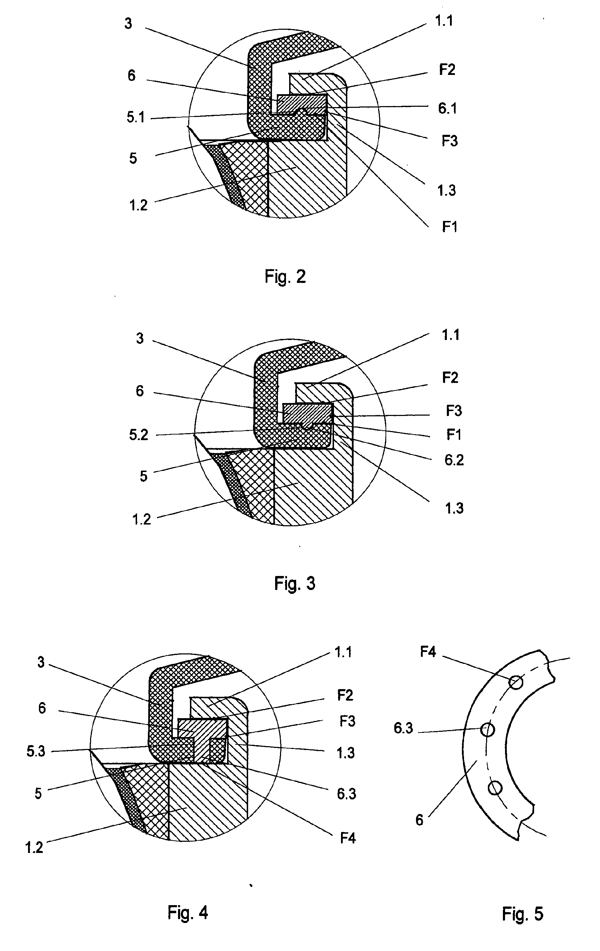

Figur 1 zeigt in schematischer Darstellung ein Kugelgelenk mit einem zu einem Kugelzapfen K hin offenen Gehäuse 1 zur Aufnahme einer beweglich gelagerten Kugel 2 des Kugelzapfens K. Zwischen dem Gehäuse 1 und dem Kugelzapfen K ist ein Dichtungsbalg 3 angeordnet, dessen nicht näher dargestellter Dichtungsbalgrand D1 an dem Schaft 4 des Kugelzapfens K abdichtend anliegt. Der gehäuseseitige Dichtungsbalgrand D2 weist einen radial umlaufenden, nach außen gerichteten Schenkel 5 auf, der annähernd parallel zu einem radial umlaufenden, nach innen gerichteten Flansch 1.1 des Gehäuses 1 verläuft, wobei der Flansch 1.1 den Schenkel 5 übergreift. Dieser Flansch 1.1 wird an der zum Schaft 4 des Kugelzapfens K hin offenen Seite des Gehäuses 1 durch Einrollen des Gehäuserandes gebildet.
Dadurch entsteht eine nach innen geöffnete, radial umlaufende u-förmige Mulde, die im Grunde drei vom Gehäuse 1 gebildete Schenkel aufweist: Flansch 1.1, Grundkörper 1.2 und Axialschenkel 1.3. Letzterer verläuft annähernd koaxial zum Kugelzapfen K und verbindet den Flansch 1.1 mit dem Grundkörper 1.2 des Gehäuses 1. Zwischen dem sich an dem Grundkörper 1.2 abstützenden Schenkel 5 des Dichtungsbalgrandes D2 und dem Flansch 1.1 befindet sich ein radial umlaufendes ringförmiges Dicht-/Sicherungselement 6. Dieses Dicht-/Sicherungselement 6 ist derart ausgebildet und angeordnet, dass eine formschlüssige Verbindung zwischen Dichtungsbalgrand D2, dem Dicht-/Sicherungselement 6 sowie dem Gehäuse 1 vorhanden ist. Dabei liegt das Dicht-/Sicherungselement 6 mehrfach am Gehäuse 1 an: So stützt sich in den Ausführungsbeispielen nach Fig. 1 bis Fig. 3 das Dicht-/Sicherungselement 6 mit seiner oberen radialen Anlagefläche F2 am Flansch 1.1 und mit seiner in radialer Richtung äußeren Anlagefläche F3 an dem Axialschenkel 1.3 des Gehäuses 1 ab. An seiner unteren, dem Schenkel 5 des Dichtungsbalgrandes D2 zugewandten Anlagefläche F1 weist das Dicht-/Sicherungselement 6 eine radial umlaufende Einbuchtung 6.1 (Fig. 1 und Fig. 2) bzw. eine radial umlaufende Erhebung 6.2 (Fig. 3) auf, welche mit einer komplementären Erhebung 5.1 bzw. einer komplementären Einbuchtung 5.2 des Schenkels 5 des Dichtungsbalgrandes D2 in Eingriff steht. An dieser Stelle sei bemerkt, dass die Formen der Einbuchtung 6.1 bzw. 5.2 sowie die Formen der Erhebung 6.2 bzw. 5.1 neben den hier halbkreisförmigen Querschnitten ebenso z.B. einen dreioder viereckigen Querschnitt aufweisen können. Auch müssen die Erhebungen 6.2 bzw. 5.1 sowie die Einbuchtungen 6.1 bzw. 5.2 nicht auf dem gesamten Umfang von Dicht-/Sicherungselement 6 bzw. Schenkel 5 angeordnet sein, sondern können in ihrer Anordnung Unterbrechungen besitzen. In Fig. 4 weist das Dicht-/Sicherungselement 6 an seiner dem Schenkel 5 des Dichtungsbalgrandes D2 zugewandten Anlagefläche F1 Vorsprünge 6.3 auf, die voneinander beabstandet sind. Dabei besitzt der Schenkel 5 des Dichtungsbalgrandes D2 komplementäre, durchgehende Öffnungen 5.3, mit denen die Vorsprünge 6.3 in Eingriff stehen. Das Ende der durch die Öffnungen 5.3 hindurchreichenden Vorsprünge 6.3 stützt sich mit einer weiteren Anlagefläche F4 am Grundkörper 1.2 des Gehäuses 1 ab.
In Fig. 5 ist ein Ausschnitt eines derartigen Dicht-/Sicherungselementes 6 mit Vorsprüngen 6.3 - von unten, aus Richtung des Grundkörpers 1.2 des Gehäuses 1 (ohne Dichtungsbalg 3) gesehen - dargestellt. Die Vorsprünge 6.3 befinden sich hier auf einem gemeinsamen Teilkreis.

Die formschlüssige Verbindung zwischen dem Gehäuse 1, dem Dichtungsbalg 3 und dem Dicht-/Sicherungselement 6 wird durch Einrollen des Gehäuserandes geschaffen. Durch die Anordnung des Dicht-/Sicherungselementes 6 mit seinen sich am Gehäuse 1 abstützenden Anlageflächen F1, F2, F3 und F4 wird eine Zerstörung des Dichtungsbalges 3 während des Einrollvorgangs verhindert.
Neben einer relativ einfach zu realisierenden Befestigung gewährleistet die Anordnung von Dichtungsbalgrand D2 und Dicht-/Sicherungselement 6 innerhalb einer durch das Gehäuse 1 gebildeten, nach innen geöffneten Mulde (Flansch 1.1, Axialschenkel 1.3, Grundkörper 1.2) zudem ein hohes Maß an Ausreißsicherheit und Dichtheit.

## Patentansprüche

1. Abdichtung für ein Kugelgelenk, welches ein Gehäuse (1) zur Aufnahme einer beweglich gelagerten Kugel (2) eines Kugelzapfens (K) sowie einen zwischen dem Gehäuse (1) und dem Kugelzapfen (K) angeordneten Dichtungsbalg (3) aufweist, dessen erster Dichtungsbalgrand (D1) an dem Schaft (4) und dessen zweiter Dichtungsbalgrand (D2) an dem Gehäuse (1) des Kugelzapfens (K) abdichtend anliegt,
**dadurch gekennzeichnet,**
**dass** das Gehäuse (1) auf der zum Schaft (4) hin offenen Seite einen radial umlaufenden, nach innen gerichteten Flansch (1.1) und der sich am Gehäuse (1) abstützende Dichtungsbalgrand (D2) einen radial umlaufenden, nach außen gerichteten Schenkel (5) aufweist, wobei zwischen dem den Schenkel (5) übergreifenden Flansch (1.1) und dem Schenkel (5) ein Dicht-/Sicherungselement (6) angeordnet ist.

2. Abdichtung nach Anspruch 1, **dadurch gekennzeichnet, dass** zwischen Gehäuse (1), Dichtelement (6), und Dichtungsbalgrand (D2) eine formschlüssige Verbindung besteht.

3. Abdichtung nach Anspruch 1 oder 2, **dadurch gekennzeichnet, dass** der Schenkel (5) des Dichtungsbalgrandes (D2) und das Dichtelement (6) zumindest teilweise innerhalb einer radial umlaufenden, nach innen geöffneten Mulde des Gehäuses (1) angeordnet sind, die durch Flansch (1.1), Grundkörper (1.2) und einen, beide verbindenden, Axialschenkel (1.3) gebildet wird.

4. Abdichtung nach Anspruch 3, **dadurch gekennzeichnet, dass** das Dichtelement (6) ringförmig ausgebildet ist und sich mit einer Anlagefläche (F1) an dem Schenkel (5) des Dichtungsbalgrandes (D2), mit einer Anlagefläche (F2) an dem Flansch (1.1) und mit einer Anlagefläche (F3) an dem Axialschenkel (1.3) des Gehäuses (1) abstützt.

5. Abdichtung nach Anspruch 4, **dadurch gekennzeichnet, dass** das Dichtelement (6) auf seiner dem Schenkel (5) des Dichtungsbalgrandes (D2) zugewandten Anlagefläche (F1) eine radial umlaufende Einbuchtung (6.1) aufweist, die mit einer komplementären radial umlaufenden Erhebung (5.1) des Schenkels (5) in Eingriff steht.

6. Abdichtung nach Anspruch 4, **dadurch gekennzeichnet, dass** das Dichtelement (6) auf seiner dem Schenkel (5) des Dichtungsbalgrandes (D2) zugewandten Anlagefläche (F1) eine radial umlaufende Erhebung (6.2) aufweist, die mit einer komplementären radial umlaufenden Einbuchtung (5.2) des Schenkels (5) in Eingriff steht.

7. Abdichtung nach Anspruch 4, **dadurch gekennzeichnet, dass** das Dichtelement (6) auf seiner dem Schenkel (5) des Dichtungsbalgrandes (D2) zugewandten Anlagefläche (F1) radial umlaufende sowie voneinander beabstandete Vorsprünge (6.3) aufweist, die in komplementäre, in axialer Richtung verlaufende, durchgehende Öffnungen (5.3) des Schenkels (5) eingreifen.

8. Abdichtung nach Anspruch 7, **dadurch gekennzeichnet, dass** die durch die Öffnungen (5.3) hindurchreichenden Vorsprünge (6.3) des Dichtelementes (6) mit einer weiteren Anlagefläche (F4) am Grundkörper (1.2) des Gehäuses (1) anliegen.

9. Abdichtung nach einem der Ansprüche 1 bis 8, **dadurch gekennzeichnet, dass** der radial umlaufende, nach innen gerichtete Flansch (1.1) des Gehäuses (1) ein durch Einrollen umgeformter Rollrand ist.

10. Abdichtung nach einem der Ansprüche 1 bis 9, **dadurch gekennzeichnet, dass** das Dichtelement (6) aus Metall oder Kunststoff besteht.
